(19) Europäisches Patentamt
European Patent Office
Office européen des brevets

(11) **EP 4 527 789 A1**

(12) **EUROPEAN PATENT APPLICATION**

(43) Date of publication:
**26.03.2025 Bulletin 2025/13**

(21) Application number: **23198378.4**

(22) Date of filing: **19.09.2023**

(51) International Patent Classification (IPC):
**B82Y 10/00** (2011.01)   **G06N 3/0464** (2023.01)
**G06N 3/084** (2023.01)   **G06N 10/40** (2022.01)
**G06N 20/00** (2019.01)

(52) Cooperative Patent Classification (CPC):
B82Y 10/00; G06N 3/0464; G06N 3/084;
G06N 10/40; G06N 20/00

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **TOYOTA JIDOSHA KABUSHIKI KAISHA**
**Toyota-shi, Aichi-ken, 471-8571 (JP)**
• **University Of Twente**
**7522 NB  Enschede (NL)**

(72) Inventors:
• **KINGE, Sachin**
**1140 BRUSSELS (BE)**
• **ZOLFAGHARINEJAD, Mohamadreza**
**7522 DA ENSCHEDE (NL)**
• **VAN DER WIEL, Wilfred Gerard**
**7521 ME ENSCHEDE (NL)**

(74) Representative: **Cabinet Beau de Loménie**
**158, rue de l'Université**
**75340 Paris Cedex 07 (FR)**

(54) **A METHOD AND DEVICE FOR TRANSFORMING AN ANALOGUE TIME-DEPENDENT ELECTRICAL SIGNAL**

(57) A method for transforming an analogue time-dependent electrical signal (10), comprising:
- providing a transforming device (20) comprising at least one input electrode, at least one output electrode and at least one control electrode, wherein a material of the transforming device between the at least one input electrode and the at least one output electrode has properties to nonlinearly and spectrally transform an electrical signal received at the at least one input electrode into an output signal at the at least one output electrode based on a control signal received at the at least one control electrode;
- inputting the analogue time-dependent electrical signal (10) at the at least one input electrode;
acquiring, as an output signal, the transformed analogue time-dependent electrical signal at the at least one output electrode.

a   Domain conversion   Long-latency calculations   Digital classifier

b   No domain conversion   Real-time processing   Analogue classifier

**FIG.1**

**Description**

BACKGROUND OF THE INVENTION

1. Field of the invention

The present disclosure relates to the field of analogue signal processing, and more particularly to a method for transforming an analogue, time-dependent electrical signal. The method may find applications in all kinds of industries, including the automotive industry.

2. Description of Related Art

Analogue time-dependent signals, such as light intensity and acoustic waveforms, are abundant in nature and form a natural way of communication. These signals can be measured and converted into temporal electrical signals with sensors such as, for instance, camera sensors and microphones. The collected temporal data contain valuable information; however, commonly expensive processing steps are required to convert this raw data into information.

Currently, the majority of information processing relies on digital processors, which require the availability of power for both processing and cooling, such as in cloud infrastructures. However, in so-called edge devices, which are entry points into more complex systems, extreme requirements exist (e.g., power constraints), such that digital processors are fundamentally limited mainly due to two reasons: (a) signal domain conversions: digital-to-analogue and time-to-frequency, and (b) data shuffling between memory and processor unit, arising from the von-Neumann architecture.

Thus, there is an urgent need for an energy-efficient solution for processing an analogue time-dependent electrical signal.

SUMMARY

In this respect, the present disclosure relates to a method for transforming an analogue time-dependent electrical signal, comprising:

- providing a transforming device comprising at least one input electrode and at least one output electrode, wherein a material of the transforming device between the at least one input electrode and the at least one output electrode has properties to non-linearly and spectrally transform an electrical signal received at the at least one input electrode into an output signal at the at least one output electrode;
- inputting the analogue time-dependent electrical signal at the at least one input electrode;
- acquiring, as an output signal, the transformed analogue time-dependent electrical signal at the at least one output electrode.

For conciseness, the method will be referred to as the transforming method hereinafter. As used herein, for conciseness and unless the context indicates otherwise, the input signal refers to the analogue time-dependent electrical signal received at the at least one input electrode.

As used herein, for conciseness and unless the context indicates otherwise, "a", "an", and "the" are intended to refer to "at least one" or "each" and to include plural forms as well. Conversely, generic uses of the plural form may include singular elements.

A time-dependent electrical signal is an electrical signal that varies over time. Electrical characteristics of the signal, e.g., current and/or voltage, may vary. An analogue signal is a signal in which information is represented by continuously variable physical quantities (e.g., electrical quantities), as opposed to a digital signal.

The input signal may be obtained from a sensor, e.g., a time-dependent sensor, e.g. a microphone, an imaging device such as a camera, electrodes, etc. The transforming method may further comprise acquiring the input signal, e.g., with such a sensor. The input signal may be an input current or an input voltage. The output signal may be an output current or an output voltage.

The input electrode and the output electrode are connected to each other by a material which has properties to non-linearly and spectrally transform the input signal into the output signal, introducing new timescales and/or spectral components. Transforming spectrally does not mean that the input signal is transformed into a spectrum, but that spectral components of the input signal are transformed. Transformation of the signal occurs *in materia,* i.e., thanks to the intrinsic properties of matter forming the material connecting the input electrode and the output electrode. The transforming device may be a device that does not follow the Turing model of computation. Examples will be detailed hereinafter.

Depending on the properties of the material, the transforming device may further comprise electronic components such as a capacitor, a resistor, an inductor, a transistor or the like. Alternatively or in addition, the properties of the material of the device may exhibit intrinsic dynamical behavior or may be designed to internally have the equivalent electronic properties without the need for external electronic components. For conciseness, both alternatives are referred to as "the transforming device" hereinafter. In particular, the capacitance of the transforming device may be non-zero. The capacitance may be chosen based on the device resistance in order to obtain the desired time dynamics. For instance, the transforming device may have a capacitive output electrode.

The transforming device is therefore configured to process the input signal to provide a non-linear, dynamic transformation thereof as the output signal. This non-linear transformation may be seen as an encoding in the sense encoding has in the field of machine learning, namely the ability to extract, in the output signal, features of the input signal. Specifically, the transformation operated by the transforming device may be seen as a temporal analogue convolution, with the convolution kernel depending on the - in general time-dependent - properties of the material. More generally, non-linearity, fading memory and frequency-selective response of the material enable to carry out time-dependent signal processing.

Since the transforming device performs in-domain (i.e., both analogue and time domain) transformation of the input signal into the output signal based on material properties possibly in combination with other electronic components as discussed above, little energy is required to supply to the transforming device itself and no analogue-to-digital conversion is needed, whereby the proposed transforming method is an energy-efficient solution for processing an analogue time-dependent electrical signal, which can advantageously be used in edge devices.

Optionally, the transforming method comprises creating, by the transforming device, subharmonics of the analogue time-dependent electrical signal in the output signal. As mentioned above, due to non-linearity, the material has a certain frequency-selective response, which enables it to select or create frequencies in the output signal based on the frequencies of the input signal. Therefore, the transforming device may be used to create harmonics (e.g. higher frequencies) of the input signal in the output signal, but also to create subharmonics (e.g. lower frequencies) of the input signal in the output signal, and/or even to filter out one or more frequency of the input signal.

Creating subharmonics of the input signal in the output signal is helpful for downstream tasks, as will be detailed hereinafter. Therefore, the proposed transforming method facilitates processing of the input signal while remaining energy efficient.

Optionally, the output signal is an analogue signal. That is, the output signal is not digitized before the output electrode. No analogue-to-digital conversion may occur between the input electrode and the output electrode. Therefore, the output signal can be handled and further processed by analogue systems, which avoids energy-consuming conversions.

Optionally, the output signal is a time-dependent electrical signal. Desirably, at least if the input signal is not constant over time, then the output signal is not constant over time either. That is, time-dependency of the input signal is maintained in the output signal. Therefore, the output signal is suitable for later processing of time-related information.

Optionally, the analogue time-dependent electrical signal is transformed multiple times while varying a time constant of the transforming device. A time constant of the transforming device may be a time representative of the responsiveness of the transforming device. For instance, if the input signal is a step function from an initial voltage to a final voltage, the time constant may represent the time necessary for the output signal to vary between an initial output voltage and a final output voltage. The dynamics of the transforming device may be represented by one or more time constants, and the time constant(s) may vary over time based on the behavior of the material of the transforming device.

In these embodiments, a plurality of output signals may be generated and/or acquired, each output signal corresponding to a tuning value of the transforming device.

Transforming the same input signal multiple times with corresponding varied time dynamics (in particular time constants) enables to produce different output signals which comprise different features of the input signal. The plurality of output signals thus obtained may then be processed in a downstream task.

Optionally, the transforming device comprises at least one control electrode and is configured to non-linearly and spectrally transform the electrical signal received at the at least one input electrode into the output signal at the at least one output electrode based on a control signal received at the at least one control electrode.

A control signal may be inputted to the control electrode in order to tune the properties of the material and therefore tune the transformation applied to the input signal. The control electrode may be connected to the aforementioned material. The transforming method may comprise inputting a control signal at the at least one control electrode. The control signal may be time-dependent or constant over time. The control signal may be or include a control voltage.

Varying the time dynamics of the transforming device may be achieved by varying the control signal at the control electrode, which changes the behavior of the transforming device, and therefore the non-linear and spectral transformation applied to the input signal, including the harmonics generation and the time constant.

Optionally, the transforming method comprises providing a plurality of said transforming devices, and the inputting comprises inputting the analogue time-dependent electrical signal at the respective at least one input electrode of the plurality of said transforming devices.

Each transforming device of the plurality of said transforming devices may have the above-described features.

The transforming devices may be similar to one another, in the sense that they have the same macroscopic characteristics, or dissimilar to one another. By inputting the (same) input signal at the respective input electrodes of the transforming devices, a plurality of output signals can be obtained. Thus, parallel processing of the input signal is possible, which facilitates real-time applications as will be explained hereinafter.

Optionally, the plurality of said transforming devices receive identical respective control signals. Considering that, in spite of their similitude, it is practically impossible to reach atomic-level identity between the plurality of transforming devices, and that the transformation is defined in particular by the properties of the material itself, said transforming devices inherently have different microscopic structures hence different behaviors, i.e., apply different transformations to the input signal. By applying identical control signals to the plurality of transforming devices, the diversity of the transforming devices guarantees spread in their respective behaviors, and therefore produces different output signals out of the same input signal, in a simple yet effective manner.

Optionally, the inputting comprises sequentially inputting the analogue time-dependent electrical signal at the at least one input electrode of a given transforming device while sequentially varying the control signal received by said given transforming device. In these embodiments, instead of or in addition to applying the same control signal to different transforming devices to generate different output signals, different controls signals are sequentially applied to the same transforming device (the so-called given transforming device) in order to likewise generate different output signals. One output signal may be generated, and possibly acquired, for each different control signal. Thanks to this embodiment, the number of transforming devices used for generating a plurality of output signals can be reduced.

Optionally, the control signal is sequentially varied randomly. These embodiments rely on the inventors' establishing that it is not necessary to exactly control the transformation applied by the transforming device. Provided that a sufficient number of output signals are generated (e.g., 10 or more, preferably 20 or more, preferably 30 or more), based on a corresponding number of different control signals, the output signals generated with randomly varying control signals appear to reflect a variety of features that is sufficient for downstream tasks. In this way, costly learning of the control signals is avoided, all the more so as, as mentioned above, the control signals may be specific to every single transforming device.

Optionally, the control signal is sequentially varied within a set of predetermined control signals obtained by optimization. Optimization may be carried out by any desired technique, e.g. metaheuristics such as a genetic algorithm. Optimization may be carried out in a similar way as training for machine learning models, namely determining the control signals necessary to obtain a certain output signal. Predetermining the control signals to be used for producing the plurality of output signals enables to maximize the differences between the output signals, and therefore to limit the number of generated output signals while still obtaining a sufficient variety thereof. A limited number of output signals avoids oversized architectures for the further processing of the output signals.

Optionally, the transforming method further comprises digitizing the output signal. Digitizing the output signal may be carried out for the purpose of observation or further processing. Optionally, an analogue-to-digital converter may be used for observation or further processing purposes.

Optionally, the at least one input electrode and the at least one output electrode are connected by a network of carrier locations within the material such that carriers can hop from one carrier location to another in a disordered way. Carrier locations may include at least one of charge sites, charge islands, single-electron transistors, quantum dots, molecular or carbon-based conductors, energy minima for carriers such as dopant, molecular or defect levels, metallic or semiconducting regions within an insulating matrix or any other system that exhibits hopping transport or other forms of nonlinear electronic transport. Hopping transport of carriers, as opposed to band transport, enables the carriers to discretely hop from one carrier location to another and brings non-linearity to the transforming device. It is noteworthy that non-linearity is often otherwise conventionally undesired. When control electrodes are provided, the non-linearity may be tunable.

An example of a transforming device based on hopping transport is disclosed in Chen, T., van Gelder, J., van de Ven, B. et al. Classification with a disordered dopant-atom network in silicon. Nature 577, 341-345 (2020). https://doi.org/10.1038/s41586-019-1901-0 (hereinafter [Chen 2020]), which only deals with static (i.e. non-temporal) signals. Considering that [Chen 2020] designed a circuit to measure the output signal with the aim of minimizing the response time, no time dynamics were observable.

Optionally, the material comprises a doped semiconductor and/or metal nanospheres and/or semiconductor nanospheres. In the doped semi-conductor, the dopant-atom network may form the above-mentioned network of carrier locations. The doping concentration may be less than in usual semiconductor applications such as transistors and the like, in order to enable hopping transport.

Alternatively or in addition, the charge-carrier-hosting islands should be sufficiently connected in order to form the above-mentioned network of carrier locations.

Optionally, the method is carried out in real-time. That is, the transformation of the input signal is carried out without waiting, as the input signal is received at the input electrode. Therefore, the output signal may be generated and acquired directly.

If further processing of the output signal is also to be carried out in real-time, parallel processing, as mentioned above, may advantageously be used to generate a plurality of output signals in real-time and therefore make the processing as fast as possible, without needing to save the output signal in a memory or the like. Thus, the method is all the more energy-efficient.

The present disclosure is further directed to a processing method for an analogue time-dependent electrical signal, comprising transforming the analogue time-dependent electrical signal by the above-described transforming method and inputting the output signal to an analogue processing system. As the case may be, the processing method applies to a plurality of output signals, mutatis mutandis, which may be inputted to the same analogue processing system or to different analogue processing systems.

The analogue processing system takes an analogue signal as an input, here the output signal, and preferably returns an analogue output. Thus, the processing method may provide end-to-end analogue feature extraction and processing (e.g. classification).

The analogue processing system may be, for instance, an analogue classifier.

Optionally, at least one sample-and-hold unit may be provided between the output electrode and the analogue processing system. A sample-and-hold unit is an analogue unit that samples the voltage of a continuously varying signal and holds or freezes its value at a constant level for a specific minimum period of time, in order to facilitate downstream processing.

The present disclosure is further directed to a transforming device for transforming an analogue time-dependent electrical signal, the transforming device comprising at least one input electrode and at least one output electrode, wherein a material of the transforming device between the at least one input electrode and the at least one output electrode has properties to non-linearly and spectrally transform an electrical signal received at the at least one input electrode into an output signal at the at least one output electrode.

The transforming device may be configured to carry out the above-mentioned transforming method and may have part or all of the above-described features.

Optionally, the at least one input electrode and the at least one output electrode are connected by a network of carrier locations within the material such that carriers can hop from one carrier location to another in a disordered way.

Optionally, the carrier locations include dopants and defect states. Using defect states in addition to dopants and possibly other carrier locations enable the transforming device to work at room temperature. This alleviates the need for a dedicated cooling system. Defect states may be obtained by damaging the material, e.g. by dry (plasma) etching.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

- Fig. 1 is a diagram showing an overview of a conventional approach and the proposed approach.
- Fig. 2a shows a top view and a cross-section view of a transforming device according to an embodiment. Fig. 2b is a chart illustrating tuning of time constant. Fig. 2c is a histogram of measured time constants during an experiment, where control voltages where randomly selected. Fig. 2d is a series of charts illustrating the creation of harmonics by the transforming device according to an embodiment.
- Fig. 3 diagrammatically shows the use of a transforming device according to an embodiment.
- Fig. 4a illustrates inputting an input signal to a plurality of transforming devices. Fig. 4b is a chart representing a frequency spectrum of the input signal. Fig. 4c is a chart representing frequency spectra of the output signals.
- Fig. 5 is a diagram of a transforming device according to another embodiment.

DETAILED DESCRIPTION OF EMBODIMENTS

The following description details transformation of time-dependent electrical signals for the purpose of classification. However, other downstream tasks than classification are encompassed, such as segmentation, generation, etc. Besides, as described above, the time-dependent electrical signal may be acquired by any suitable analogue sensor and may represent any type of data, such as sounds, images, videos, point clouds, biological measurements, etc. While the proposed approach is most useful for electrical signals which are inherently analogue and time-dependent, it also applies to static (i.e. non-time-dependent) data which are represented by an analogue time-dependent electrical signal; for instance, a static 2D image may be converted into time-dependent data by sequentially scanning its pixels.

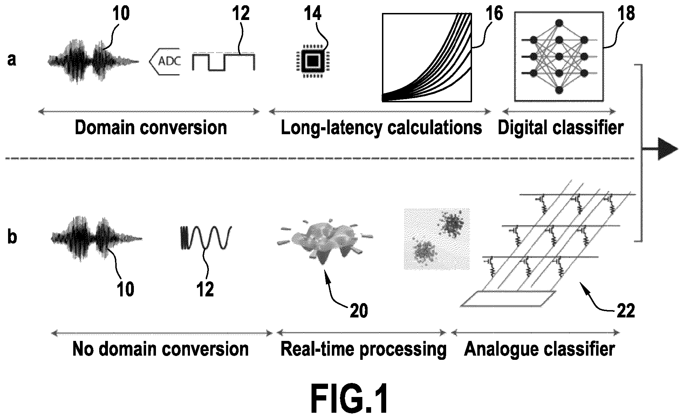

Figure 1a diagrammatically illustrates a conventional processing of analogue time-dependent electrical signals: an input signal 10 is first digitally sampled in order to be converted to a digital signal 12 (digital conversion). Then, long-latency calculations are applied in order to extract temporal features from the digital signal. These calculations often involve a digital processor 14, i.e. a processing device configured to carry out calculations on digital signals, and time-frequency representations 16, e.g. a Fourier transform or the like, which are computationally costly. Then, the temporal features are input to a digital classifier, such as a neural network 18, which outputs a predicted class of the input.

In contrast to this time- and energy-consuming approach, the present disclosure proposes a different approach in Fig. 1b, in which the analogue time-dependent electrical signal (input signal) 10 does not undergo any domain conversion, i.e. is not digitized, but is inputted to a transforming device 20 to be non-linearly and spectrally transformed into an output signal, possibly in real time. In these embodiments, the output signal is an analogue time-dependent electrical signal. The output signal is acquired. The output signal may then be classified, e.g. through an analogue classifier 22. The analogue classifier 22 is an example of an analogue processing system.

In this proposed approach, the input signal 10 undergoes less processing, including an absence of domain conversion, which makes this approach faster and less energy-consuming. In addition, the proposed approach may not require any memory. Besides, the in-domain transformation by the transforming device 20 may make the classification step simpler, as will be detailed hereafter. Overall, in some embodiments, the number of operations per unit of time per unit of power is improved by a factor from 10 to 100 as compared to the digital approach of Fig. 1a.

In addition, the proposed architecture is CMOS-compatible, i.e., the standard fabrication process for semiconductor devices, such as metal oxide-field-effect transistors (MOSFET) can be applied to fabricate large-scale number of devices together with other electronic components on a single chip using standard equipment employed in semiconductor industry.

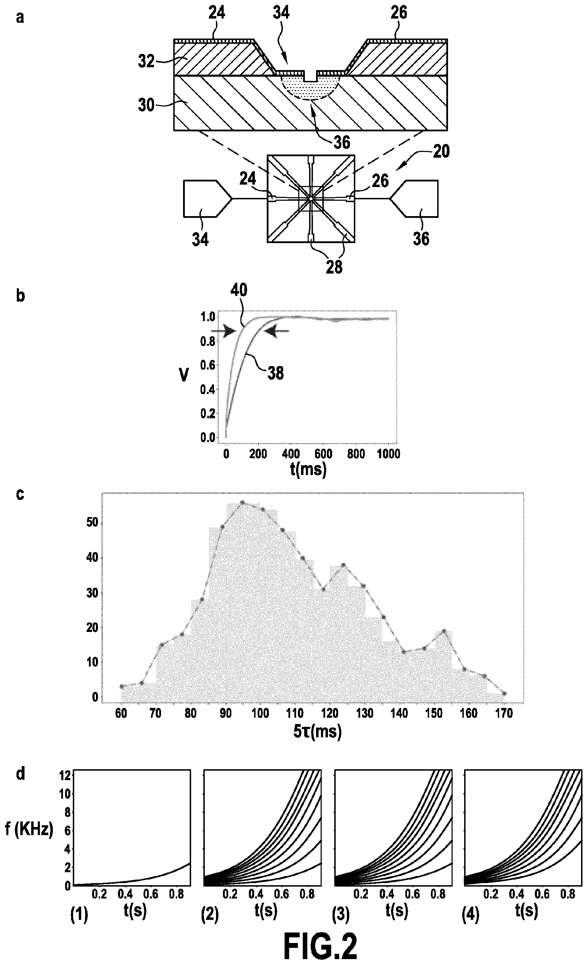

Figure 2a shows a transforming device 20 according to an embodiment, in top view as observed by scanning electron microscopy (lower part of Fig. 2a) and as a cross-sectional diagram (higher part of Fig. 2a). The transforming device comprises a plurality of electrodes, among which at least one input electrode 24, at least one output electrode 26 and optionally at least one control electrode 28. In this embodiment, the transforming device 20 comprises eight electrodes including one input electrode 24, one output electrode 26 and six control electrodes 28. However, the electrodes can be used as input, output or control electrodes in a different manner, and the number of electrodes may be varied, in total and/or within each type of electrode. For instance, in another embodiment, the transforming device 20 may comprise twelve electrodes.

As the input signal, the output signal and the control signal, respective input voltage, output voltage and control voltage may be applied at the corresponding electrodes, without loss of generality.

The electrodes may be formed from any suitable electrically conducting material. In an embodiment, a Ti/Pd alloy is used for forming the electrodes.

As shown in cross-section, the transforming device 20 comprises a doped semiconductor layer 30 and optionally an insulating layer 32. The insulating layer 32 may be provided between the semiconductor layer 30 and the electrodes. However, the insulating layer 32 may have a through hole 34 for the electrodes to reach the semiconductor layer 30 at a region hereinafter referred to as the active region 36.

The insulating layer 32 may be made of a dielectric material, e.g. $SiO_2$, $Al_2O_3$, $HfO_2$, $Si_3N_4$, parylene, etc.

The semiconductor layer 30 may be made of n-type or p-type semiconductor, e.g., by doping the intrinsic silicon with phosphorous or boron atoms.

In the active region 36, the electrodes may face one another, e.g. being radially arranged at regular or irregular intervals over a circumference, without directly contacting one another. The material of the transforming device 20, here the semiconductor layer 30, may be further doped, possibly lightly doped, in the active region 36, e.g. with dopants such as boron or arsenic. The bulk semiconductor material 30 may be undoped (intrinsic) or may be doped, possibly lightly doped. The (light) doping in the active region 36 may be opposite to the doping of the semiconductor region 30. The dopant concentration may decrease from the electrodes to the opposite side of the semiconductor layer 30. For instance, the boron atoms may be implanted in n-type silicon with a concentration of $2.10^{19}$ cm$^{-3}$ at the surface in contact with the electrodes. The dopant concentration may be adapted, with the aim of having at least one ohmic contact between the electrodes and the active region 36. Besides, ion implantation enables to automatically obtain the above-mentioned concentration gradient.

Between the input electrode 24 and the output electrode 26, a recess may be formed in the active region 36 of the semiconductor layer 30 to ensure that the carriers moving from the input electrode 24 to the output electrode 26 travel through a region of lesser dopant concentration. In the above example, the dopant concentration may decrease to about $5.10^{17}$ cm$^{-3}$ at the bottom of the recess. The recess may be about 300 nm in diameter and 80 nm deep. The electrodes may extend up to the edge of the recess or to the vicinity thereof.

Due to the rather low concentration, the dopant atoms in the active region 36 form a disordered network of carrier locations configured to enable hopping transport of the carriers. In other words, the input electrode 24 and the output electrode 26 are connected by a network of carrier locations within the material such that carriers can hop from one carrier location to another in a disordered way.

The current-voltage characteristics can thus be modeled as electric-field-activated hopping conduction, possibly at low temperatures. However, when creating the recess by etching, and more particularly dry etching, the surface of the active region 36 may be mechanically damaged, thus adding defect states, such as Pb centers, which can also act as hopping sites (or more generally carrier locations). This enables the transforming device 20 to operate at room temperature and even higher.

Thanks to hopping transport, the material of the transforming device 20 between the input electrode 24 and the output electrode 26 has properties to non-linearly and spectrally transform an electrical signal received at the input electrode 24 into an output signal at the output electrode 26, based on a control signal received at the control electrode 28 as the case may be. A potential landscape is formed in the active region 36 and determines the output signal based on the input signal and the control signal. Control signals applied at the control electrodes modify the potential landscape. The controls signals, e.g. control voltages, if any, should be low enough (e.g., less than a predetermined threshold) for the transforming device 20 to operate within its non-linear regime (e.g. 0.05V-0.4V or less, however this range depends on the actual transforming device 20).

The electronic properties of the transforming device, such as its resistance, depend not only on the material properties but also on the potential landscape that currently exist in the active region 36, which is influenced *inter alia* by the output signal. This illustrates how, in some embodiments, the transformation applied by the transforming device is time-dependent, possibly with some recurrence phenomenon between the output signal and the input signal.

The transforming device 20 may be operated in a voltage-input-voltage-output mode.

For the sake of observation or further processing, a voltage digital-to-analogue converter (DAC) 34 may be connected to the input electrode 24 and, likewise but independently, a voltage analogue-to-digital converter (ADC) 36 may be connected to the output electrode 26. Thus, the transforming method may comprise digitizing the output signal.

Figure 2b is a chart illustrating a normalized voltage as a function of time (in milliseconds). The plots 38, 40 show two output signals obtained by inputting a same step function to the transforming device 20 for two different control signals. Figure 2b shows that the plot 40 reaches its maximum value quicker than the plot 38, which confirms the ability to vary a time constant of the transforming device 20 by changing the control signal.

The time constant of the transforming device 20, noted $\tau$, corresponds to the product RC of the resistance and the capacitance of the transforming device 20 (including the resistance and capacitance of components external to the active region 36, as the case may be).

Figure 2c is a histogram of measured time constants for 500 randomly selected control signals, and illustrates the count of output signals as a function of their time constant. By changing the surface potential of the active region 36 of the transforming device 20, the device behavior (i.e., non-linear resistance) changes accordingly, and thus, time constant of the output signal is tuned. In this example, as can be seen in Fig. 2c, the five times of the time constant (i.e., $5*\tau$, where $\tau =$ RC) ranges from about 60 ms up to about 170 ms.

Figure 2d illustrates the non-linear transformation achievable by the transforming device 20. Specifically, Fig. 2d includes four spectrogram charts (1)-(4) (frequency f, in kHz, over time t, in seconds). Chart (1) illustrates an input signal which, in this case, is chosen as a chirp, namely a signal in which the frequency increases with time. Chart (2) illustrates the output signal of the transforming device when all control signals applied to the control electrodes are set to zero. Charts (3) and (4) illustrate two output signals with different (non-zero) control signals applied to the control electrodes.

The signal of chart (1) is a voltage signal defined as follows:

$$V(t) = \sin\left[2\pi f_0 \left(\frac{k^t - 1}{\ln(k)}\right) + \varphi_0\right], \text{ where } \varphi_0 = -\frac{\pi}{2}, \; k = \left(\frac{f_1}{f_0}\right)^{\frac{1}{T}}, \; T = 1, \; f_1 = 2 \text{ kHz,}$$

and $f_0 = 100$ *Hz*.

As can be seen in chart (2), the output signal contains up to 5th harmonics when all control voltages are set to 0V with respect to ground. Under different sets of control voltages, the device can selectively remove a harmonic (chart (3)) or more interestingly filter out the fundamental tone and only generate higher harmonics (chart (4)), or yet filter out any desired harmonic(s).

Therefore, the transforming method may comprise creating, by the transforming device, subharmonics of the analogue time-dependent electrical signal in the output signal.

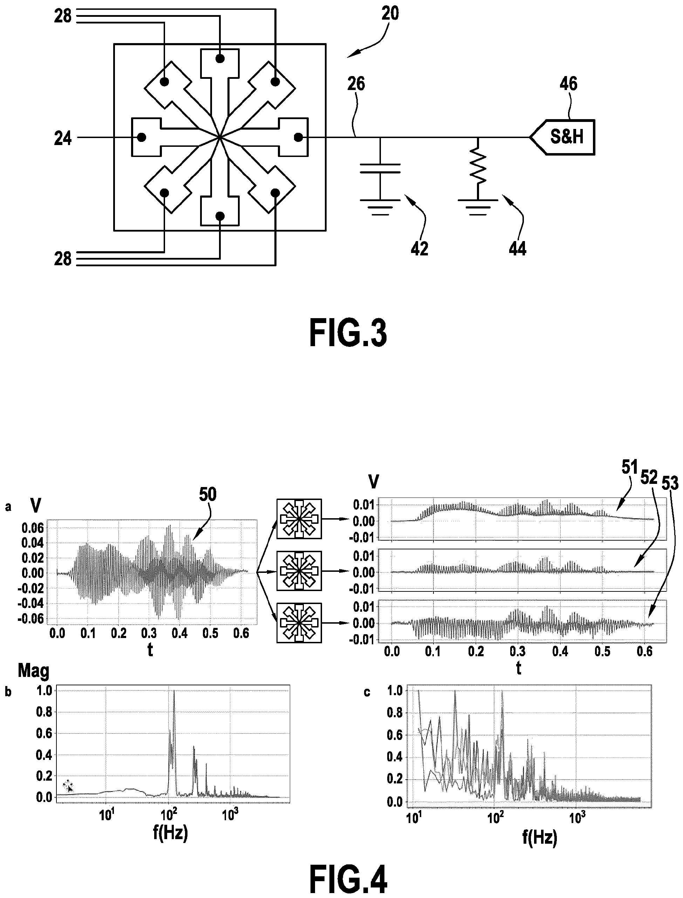

Figure 3 illustrates a diagram of a concrete implementation of the transforming device 20, according to an embodiment. In this example, as mentioned before, an input electrode 24 and an output electrode 26 are diametrically opposite each other, while control electrodes 28 are arranged angularly in-between.

The input signal may be inputted directly at the input electrode 24. The control signals may be inputted directly at the respective control electrodes 28. The output electrode 26 may be a capacitive electrode connected to the ground via a capacitor 42 and otherwise connected to the ground via a resistor 44. The capacitor 42 may have a capacitance between 50μF and 200μF, preferably between 75 and 150μF, preferably about 100μF. The resistor 44 may have a resistance greater than 0.5GΩ, preferably greater than 0.75 GΩ, preferably greater than 1 GΩ. In alternatives, the capacitor 42 may be omitted if the capacitance of the active region 36 is large enough, e.g., thanks to a relatively slow hopping transport of charges from input to output. More generally, the transforming device 20 may have a non-zero capacitance, through an external component as illustrated (here the capacitor 42) and/or based on internal properties of the material.

Besides, the output electrode 26 may be connected to any desired downstream device, e.g. an analogue processing device, e.g. through a sample-and-hold unit 46. The resistor 44 needs not be explicitly provided and here represents the equivalent input resistance of the sample-and-hold device (or any other desired downstream device), which, as discussed above, has to be large enough in order to prevent time-dynamics of the output signal to be lost for further processing.

As mentioned above, the transforming device 20 may be used to carry out temporal convolutions. That is, thanks to the material's tunable non-linearity and fading memory, the transforming device 20 can carry out analogue temporal convolutions, in particular with large kernel size. The receptive field of the transforming device 20, namely the transforming device ability to remember previous input data, may be tuned by the control signals. For instance, the receptive field may be about from 1ms to 100ms wide, preferably from 5ms to 50ms wide, preferably about 10ms wide.

As shown in Fig. 4a, an input signal 50, here shown on the left-hand side in a voltage-over-time chart, may be transformed multiple times while varying a time constant of the transforming device 20. This results in different output signals 51, 52, 53.

As can be seen by comparing the spectrum (magnitude as a function of frequency) of the input signal 50 shown in Fig. 4b and the spectra of the output signals 51, 52, 53 shown in Fig. 4c, the output signals 51, 52, 53 may contain not only the fundamental tone and/or harmonics of the input signal 50, but also subharmonics thereof. Thus, the multiple transformations act as analogue feature extraction operations to extract information from the input signal in order to facilitate downstream processing thereof. Observation of the output signals show indeed that some clusterizations of the output signals start to appear as compared to randomly shuffled input signals. This further facilitates downstream processes such as classification. In other words, the role of the transforming device in the feature extraction is dimensionality reduction and clustering similar input signals into corresponding groups, making the subsequent classification task easier.

With reference back to Fig. 4a, the transforming device 20 is depicted multiple times for ease of understanding. This may correspond to an embodiment in which the transforming method comprises providing a plurality of said transforming devices 20, and the inputting comprises inputting the input signal at the respective input electrodes of the plurality of said transforming devices. For reasons explained above, these plural transforming devices 20 would output different output signals 51, 52, 53, even if they receive no control signals and all the more so if they receive identical respective control signals. This is an example of parallel processing.

However, it is not necessary to provide as many transforming devices as desired output signals, considering that a given transforming device 20 may be used several times with different control signals. In other words, the inputting may comprise sequentially inputting the input signal at the input electrode 24 of a given transforming device 20 while sequentially varying the control signal received by said given transforming device. At extremes, a single transforming device may be provided to generate all the output signals. Time multiplexing may be used in this respect.

The control signals may be selected randomly or within a set of predetermined control signals obtained by optimization, as desired. The former does not require any prior training or optimization but requires a greater number of output signals to ensure that the proper features have been extracted from the input signal, whereas the latter enables to decrease the number of output signals at the cost of some prior training. Options may be combined.

Although three transformations are shown in Fig. 4a, any number of transformations may be selected, in particular depending on the downstream task and/or on whether the control signals are selected randomly or predetermined based on optimization. When selected randomly, more than 10, 20 or even 30 (e.g. 32) output signals may be desired.

The analogue classifier 22 may take a plurality of inputs, namely the output signals such as the output signals 51, 52, 53, to classify the input signal 50. The analogue classifier 22 may be implemented in any desired technology, e.g. analogue in-memory computing (AIMC) such as a memristor crossbar array (MCA) as illustrated or an array of trained transforming devices 20. The MCA may be based on a phase-change material (PCM), e.g. as in [Le Gallo, M., Khaddam-Aljameh, R., Stanisavljevic, M. et al. A 64-core mixed-signal in-memory compute chip based on phase-change memory for deep neural network inference. Nat Electron (2023)]. For instance, the analogue classifier may be implemented as a CNN classifier on a HERMES chip, which contains $256 \times 256$ backend-integrated multilevel phase change material (PCM) devices as well as analogue-to-digital converters and local digital processing units (LDPU). The Hermes chip is trained offline using the data measure from the transforming device 20. The training phase has two steps of full-precision and re-training each for 200 epochs, which latter is used to make the classifier robust to quantization and Gaussian noise arising from the non-ideality of the memristor cells. The re-training may comprise two steps: (1) in every forward path, each weight and bias of the network is added with a random value chosen from a Gaussian distribution with 6.7% of the magnitude of the weight, and (2) after each training batch, weights and biases are clipped to $2.5 \times \sigma_W$ implementing the low-bit quantization, where $\sigma_W$ is the standard variation of the distribution of weights. The learned weights of the network are programmed to each individual memory cell using gradient descent-based programming.

As an alternative, digital classification is also possible, e.g. with a conventional Central Processing Unit (CPU), Graphical Processing Unit (GPU) or Application-Specific Integrated Circuit (ASIC), which are known per se in the art. The digital classification may be carried out by a machine learning model, e.g. a CNN. In an embodiment, a CNN model with a small receptive field (k=8 and 3) may be used. As the case may be, digitization of the output signal may be carried out as explained before.

The transforming method may be used on the context of a driving method for a vehicle, which method may comprise acquiring an analogue time-dependent electrical signal as an input signal, transforming the input signal by the transforming method and operating the vehicle based on the output signal. For instance, if the input signal represents a voice command (e.g. acquired by a microphone) or a video (e.g. acquired by a camera sensor), the transforming method enables efficient processing thereof (or even "procensing" or "in-sensor computing", namely processing directly within the sensor) and the vehicle can be operated based on the classification of the content of the voice command or the video. Many other applications are encompassed, including but not limited to control of vehicles, control of robots, navigation systems, engine monitoring, speech recognition, sensing-related applications (e.g. smart homes), medical monitoring, wearable devices, fault-detection systems, etc. In addition to its advantages in terms of energy consumption and low-latency, the transforming method, by enabling *in materia* transformation of the input signal, further addresses situations of privacy concerns and/or limited connectivity.

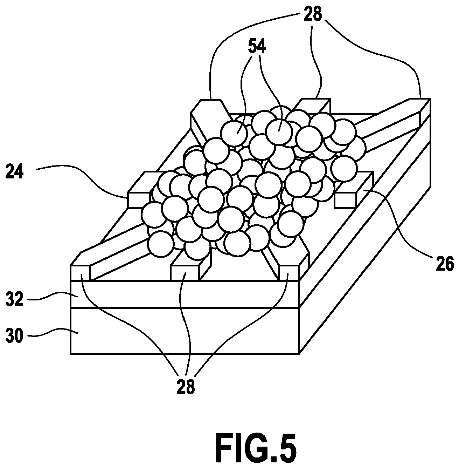

Figure 5 illustrates a transforming device 20 according to another embodiment. In this figure, the elements corresponding or identical to those of the first embodiment will receive the same reference sign and description thereof will be omitted.

The transforming device 20 of Fig. 5 differs from that of Fig. 2 in that it comprises metal nanospheres 54 forming a disordered network of carrier locations. The metal nanospheres are in contact with each other and collectively contact each of the electrodes, including the input electrode 24, the output electrode 26 and the control electrodes 28. No recess is needed in the insulating layer 32. In an example, the metal may be gold. Instead of metallic nanospheres, semiconducting nanospheres may be used. Further details may be found in S.K. Bose at al: Evolution of a Designless Nanoparticle Network into Reconfigurable Boolean Logic, Nature Nanotechnology 10, 1048 (2015).

As a further alternative, the transforming device 20 could comprise polymeric materials with islands to form the disordered network of carrier locations.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

**Claims**

1. A method for transforming an analogue, time-dependent electrical signal (10, 50), comprising:

   - providing a transforming device (20) comprising at least one input electrode (24) and at least one output electrode (26), wherein a material of the transforming device between the at least one input electrode (24) and the at least one output electrode (26) has properties to non-linearly and spectrally transform an electrical signal received at the at least one input electrode (24) into an output signal at the at least one output electrode (26);
   - inputting the analogue time-dependent electrical signal (10, 50) at the at least one input electrode (24);
   - acquiring, as an output signal, the transformed analogue time-dependent electrical signal at the at least one output electrode (26).

2. The method of claim 1, comprising creating, by the transforming device, subharmonics of the analogue time-dependent electrical signal in the output signal.

3. The method of claim 1 or 2, wherein the output signal is an analogue time-dependent electrical signal.

4. The method of any one of claims 1 to 3, wherein the analogue time-dependent electrical signal (50) is transformed multiple times while varying a time constant of the transforming device.

5. The method of any one of claims 1 to 4, wherein the transforming device comprises at least one control electrode (28) and is configured to non-linearly and spectrally transform the electrical signal received at the at least one input electrode (24) into the output signal at the at least one output electrode (26) based on a control signal received at the at least one control electrode (28).

6. The method of any one of claims 1 to 5, comprising providing a plurality of said transforming devices (20), and wherein the inputting comprises inputting the analogue time-dependent electrical signal (50) at the respective at least one input electrode (24) of the plurality of said transforming devices (20), optionally wherein the plurality of said transforming devices (20) receive identical respective control signals.

7.  The method of claim 5, wherein the inputting comprises sequentially inputting the analogue time-dependent electrical signal (50) at the at least one input electrode (24) of a given transforming device (20) while sequentially varying the control signal received by said given transforming device (20).

8.  The method of claim 7, wherein the control signal is sequentially varied randomly.

9.  The method of claim 7, wherein the control signal is sequentially varied within a set of predetermined control signals obtained by optimization.

10. The method of any one of claims 1 to 9, further comprising digitizing the output signal, optionally with a voltage analogue-to-digital converter (36).

11. The method of any one of claims 1 to 10, wherein the at least one input electrode (24) and the at least one output electrode (26) are connected by a network of carrier locations within the material such that carriers can hop from one carrier location to another in a disordered way.

12. The method of any one of claims 1 to 11, wherein the material comprises a doped semiconductor (30) and/or metal nanospheres (54) and/or semiconductor nanospheres.

13. The method of any one of claims 1 to 12, wherein the method is carried out in real-time.

14. A processing method for an analogue time-dependent electrical signal, comprising transforming the analogue time-dependent electrical signal by the method of any one of claims 1 to 13 and inputting the output signal to an analogue processing system, such as an analogue classifier (22).

15. A transforming device (20) for transforming an analogue time-dependent electrical signal (10, 50), the transforming device (20) comprising at least one input electrode (24) and at least one output electrode (26), wherein a material of the transforming device (20) between the at least one input electrode (24) and the at least one output electrode (26) has properties to non-linearly and spectrally transform an electrical signal received at the at least one input electrode (24) into an output signal at the at least one output electrode (26).

16. The transforming device of claim 15, wherein the at least one input electrode (24) and the at least one output electrode (26) are connected by a network of carrier locations within the material such that carriers can hop from one carrier location to another in a disordered way, optionally wherein the carrier locations include dopants and defect states.

**FIG.1**

FIG.2

FIG.3

FIG.4

**FIG.5**

Europäisches
Patentamt

European
Patent Office

Office européen
des brevets

# EUROPEAN SEARCH REPORT

Application Number

EP 23 19 8378

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LI CAN ET AL: "Analogue signal and image processing with large memristor crossbars", NATURE ELECTRONICS, vol. 1, no. 1, 4 December 2017 (2017-12-04), pages 52-59, XP093001160, DOI: 10.1038/s41928-017-0002-z | 1-10, 12-16 | INV. B82Y10/00 ADD. G06N3/0464 G06N3/084 G06N10/40 G06N20/00 |
| Y | * page 52 – page 58 * | 11 | |
| Y | RUIZ EULER HANS-CHRISTIAN ET AL: "A deep-learning approach to realizing functionality in nanoelectronic devices", NATURE NANOTECHNOLOGY, vol. 15, no. 12, 19 October 2020 (2020-10-19), pages 992-998, XP037311908, ISSN: 1748-3387, DOI: 10.1038/S41565-020-00779-Y | 11 | |
| A | * page 992 – page 997 * * Appendix "Methods" * | 1-10, 12-16 | |
| | | | **TECHNICAL FIELDS SEARCHED (IPC)** |
| A,D | CHEN TAO ET AL: "Classification with a disordered dopant-atom network in silicon", NATURE,, vol. 577, no. 7790, 16 January 2020 (2020-01-16), pages 341-345, XP036989136, DOI: 10.1038/S41586-019-1901-0 [retrieved on 2020-01-15] * the whole document * | 1-16 | B82Y G06N |

-/--

The present search report has been drawn up for all claims

| Place of search | Date of completion of the search | Examiner |
|---|---|---|
| The Hague | 20 February 2024 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 23 19 8378

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GARDNER STEVEN D ET AL: "An Inkjet-Printed Artificial Neuron for Physical Reservoir Computing", IEEE JOURNAL ON FLEXIBLE ELECTRONICS, IEEE, vol. 1, no. 3, 22 July 2022 (2022-07-22), pages 185-193, XP011927176, DOI: 10.1109/JFLEX.2022.3193346 [retrieved on 2022-07-25] * page 185 - page 192, left-hand column, paragraph 1 * | 1-16 | |

TECHNICAL FIELDS
SEARCHED (IPC)

The present search report has been drawn up for all claims

| Place of search | Date of completion of the search | Examiner |
|---|---|---|
| The Hague | 20 February 2024 | Volkmer, Markus |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHEN, T.** ; **VAN GELDER, J.** ; **VAN DE VEN, B. et al.** Classification with a disordered dopant-atom network in silicon. *Nature*, 2020, vol. 577, 341-345, https://doi.org/10.1038/s41586-019-1901-0

- **LE GALLO, M.** ; **KHADDAM-ALJAMEH, R.** ; **STA-NISAVLJEVIC, M. et al.** A 64-core mixed-signal in-memory compute chip based on phase-change memory for deep neural network inference. *Nat Electron*, 2023
- **S.K. BOSE**. Evolution of a Designless Nanoparticle Network into Reconfigurable Boolean Logic. *Nature Nanotechnology*, 2015, vol. 10, 1048